# EUROPÄISCHE PATENTSCHRIFT

(11) **EP 3 499 031 B1**
(45) Veröffentlichungstag und Bekanntmachung des Hinweises auf die Patenterteilung: **02.02.2022**
(21) Anmeldenummer: 18211540.2
(22) Anmeldetag: 11.12.2018
(51) Int. Cl.: F03D 80/70, F03B 11/06, F03B 13/26, F16C 41/00

(54) **LAGERANORDNUNG**
BEARING ASSEMBLY
DISPOSITIF DE STOCKAGE

(30) Priorität: 14.12.2017 DE 102017222788
(43) Veröffentlichungstag der Anmeldung: 19.06.2019
(73) Patentinhaber: Aktiebolaget SKF, 415 50 Göteborg (SE)
(72) Erfinder: Baumann, Michael, 97503 Gädheim (DE); Hofmann, Matthias, 97422 Schweinfurt (DE)
(74) Vertreter: Kuhstrebe, Jochen

(56) Entgegenhaltungen:
- EP-A1- 2 829 726
- CN-U- 203 730 567
- DE-C1- 19 629 168
- US-A1- 2014 191 508

## Beschreibung

### Lageranordnung

Vorliegende Erfindung betrifft eine Lageranordnung für eine Windkraftanlage oder eine Gezeitenkraftanlage mit einem Turm und einer Gondel gemäß Patentanspruch 1, wobei die Lageranordnung einen unteren Teil, der an dem Turm befestigbar ist, und einen oberen Teil aufweist, der an der Gondel befestigbar ist.

Bei Wind- oder Gezeitenkraftanlagen werden Lageranordnungen verwendet, um einen Turm und eine Gondel der Kraftanlage drehbar miteinander zu verbinden. Hierbei wird ein unterer Teil der Lageranordnung an dem Turm und ein oberer Teil der Lageranordnung an der Gondel befestigt. Die Gondel kann durch die Lageranordnung je nach Wind- oder Strömungsrichtung ausgerichtet werden, um eine optimale Energieerzeugung zu gewährleisten. Ist die Gondel den aktuellen Verhältnissen entsprechend ausgerichtet, kann die Lageranordnung arretiert werden.

Aus der WO 2016/137625 A1 ist ein solcher Bremsmechanismus bekannt. Bei diesem weist eine Lageranordnung Ringe mit Arretierlöchem auf, in die Bolzen eingreifen können, um die Gondel in Bezug auf den Turm zu arretieren. Allerdings kann hierbei die Gondel nur in bestimmten, vorgegebenen Positionen arretiert werden.

Aus der EP 2 829 726 A1 ist ein Generator für eine Windturbine bekannt, wobei ein Bremsmechanismus vorgesehen ist, um eine Bremskraft auf eine Gondel des Generators auszuüben. Der Bremsmechanismus umfasst eine Bremssscheibe, die an dem oberen Ende eines Turms des Generators vorgesehen ist, und einen Bremssattel, der an einer Grundplatte der Gondel angeordnet ist.

Es ist deshalb Aufgabe vorliegender Erfindung, eine Lageranordnung bereitzustellen, durch die eine flexible Arretierung der Gondel ermöglicht wird.

Diese Aufgabe wird durch eine Lageranordnung für eine Windkraftanlage oder eine Gezeitenkraftanlage mit einem Turm und einer Gondel gemäß Patentanspruch 1 gelöst, wobei die Lageranordnung einen unteren Teil, der an dem Turm befestigbar ist, und einen oberen Teil aufweist, der an der Gondel befestigbar ist.

Im Folgenden wird eine solche Lageranordnung näher beschrieben. Die Lageranordnung weist ein Lager auf, um eine Rotation der Gondel in Bezug auf den Turm zu ermöglichen. Insbesondere kann die Gondel in Bezug auf eine Wind- oder Strömungsrichtung ausgerichtet werden. Die Ausrichtung kann beispielsweise derart erfolgen, dass eine optimale Energieerzeugung ermöglicht wird. Um die Gondel auszurichten, kann die Lageranordnung die Wind- oder Gezeitenrichtung über Sensoren ermitteln und elektrische Stellmotoren zur Ausrichtung der Gondel ansteuern.

Die Lageranordnung weist des Weiteren eine Arretiervorrichtung auf, um die Gondel in einer festen Position in Bezug auf den Turm zu arretieren. Die Arretierung kann beispielsweise erfolgen, wenn die Gondel wie oben beschrieben ausgerichtet ist.

Um eine flexible Arretierung der Gondel in Bezug auf den Turm zu ermöglichen, weist die Arretiervorrichtung einen Bremsmechanismus mit einer Bremsscheibe und zumindest einem Bremssattel auf. Der Bremssattel, auch Bremszange genannt, kann dabei hydraulisch über Kolben oder elektromechanisch beispielsweise über eine Spindel ausgestaltet sein. Die Anzahl der Bremssättel ist variabel und wird durch die notwendigen Bremskraft- und Platzverhältnisse bestimmt.

Der vorgeschlagene Bremsmechanismus bietet den Vorteil, dass die Gondel in jeder beliebigen Position in Bezug auf den Turm arretiert werden kann. Somit wird eine sehr flexible Ausrichtung und Arretierung der Gondel ermöglicht. Der Bremsmechanismus ist bevorzugt mit einer Ansteuerung gekoppelt, um den Bremsvorrichtung zu aktivieren. Die Ansteuerung dient dazu, die Bremssättel derart anzusteuern, dass sie mit der Bremsscheibe in Wechselwirkung treten, d.h. Bremsbeläge, die in den Bremssätteln sitzen, über der Bremsscheibe zuspannen, um die Gondel abzubremsen und/oder zu arretieren.

Bisherige Lageranordnungen werden als Einzelteile geliefert und vor Ort in die Kraftanlage eingebaut und zusammengesetzt. Diese müssen jedoch nach dem Einbau beispielsweise auf Dichtheit getestet werden. Um dies zu vermeiden, kann die vorgeschlagene Lageranordnung als Gesamtsystem bereitgestellt werden und in bereits zusammengesetztem Zustand in der Kraftanlage montiert werden. Auf diese Weise wird eine Plug-and-Play-Lösung bereitgestellt, die einfach in die Kraftanlage integriert werden kann. Dies reduziert mögliche Fehler beim Einbau. Die nötigen Tests, wie beispielsweise auf Dichtheit, können somit bereits bei der Herstellung erfolgen.

Gemäß einer Ausführungsform kann die Bremsscheibe an dem unteren Teil und der Bremssattel an dem oberen Teil angeordnet sein. Das bedeutet, dass die Bremsscheibe als feststehender Teil an dem Turm angeordnet ist und der Bremssattel als rotierender Teil an der Gondel angeordnet ist. Alternativ kann die Bremsscheibe an dem oberen Teil und der Bremssattel an dem unteren Teil angeordnet sein.

Der Bremssattel kann ein elektrisch angetriebener Bremssattel sein. In diesem Fall kann die Ansteuerung über einen Stellmotor erfolgen. Ein elektrischer Antrieb hat den Vorteil, dass keine Hydraulikflüssigkeit vorhanden ist und somit keine Leckage auftreten kann. Die Ansteuerung kann über einen elektrischen Motor in Kombination mit einer Rollspindel erfolgen. Fällt die Stromversorgung des elektrischen Motors aus, ist die Brems- und Arretierwirkung des Bremsmechanismus aktiv, da die Rollspindel in Zusammenhang mit einer magnetischen Bremse des elektrischen Motors eine Selbstverriegelung bereitstellt. Sollte bei einem Stromausfall der Bremsmechanismus gelöst werden müssen, kann die Notbetätigung der elektrischen Bremse über eine Notstromversorgung (beispielsweise Batterie oder Superkondensatoren) erfolgen und so die Arretierung der Gondel lösen.

Alternativ kann der Bremssattel ein hydraulisch angetriebener Bremssattel sein. Im Vergleich zu einer elektrisch angetriebenen Bremszange kann ein hydraulisch angetriebener Bremssattel kompakter ausgeführt sein, da kein Stellmotor erforderlich ist.

Insbesondere wenn es sich bei der Kraftanlage um eine Gezeitenkraftanlage handelt, ist es erforderlich, dass die Lageranordnung gegenüber einem Wasser- und/oder Schmutzeintrag abgedichtet ist. Hierzu ist eine Dichtung erforderlich, die auch hohen Drucken standhält, wie sie unter Wasser in großer Tiefe vorherrschen.

Hierzu weist die Lageranordnung eine Dichtungsanordnung auf, die in der Lageranordnung integriert ist. Da die Lageranordnung bevorzugt als Systemlösung bereitgestellt wird, d.h. in zusammengebautem Zustand, kann die Dichtung bereits getestet sein. Somit kann die Dichtheit bereits bei Auslieferung der Lageranordnung gewährleistet werden.

Bei der Dichtungsanordnung handelt es sich um ein Dichtungssystem, das aus einer Vielzahl von Radialdichtungen und einer mit diesen zusammenwirkenden Laufbuchse, gegen die die Radialdichtungen abdichten, besteht. Das Dichtungssystem wird bevorzugt an einer Unterseite des Lagers der Lageranordnung angebracht. Die Radialdichtungen sind dabei übereinander angeordnet. Jede Radialdichtung kann in einem separaten Dichtungsträgerring befestigt sein, der die jeweilige unter Druck stehende Dichtung mechanisch stützen kann. Die Dichtungsträgerringe können miteinander durch Schrauben und eine Zentrierung verbunden sein.

Die Laufbuchse kann aus einem Stahl und/oder einer Beschichtung bestehen, der/die einer hohen Gefahr von Korrosion im Offshore-Bereich standhält. Die Laufbuchse kann an der Unterseite der Lageranordnung mittels Presspassung auf den Lagerring, oder ein mit diesem verbundenem Bauteil montiert sein.

Die erste, d.h. unterste, Radialdichtung dient bevorzugt als Schutz vor einem Eintrag vor Schmutz, wie beispielsweise Sand oder Sedimenten, um die zweite, darüber angeordnete Radialdichtung zu schützen. Der Dichtungsträgerring der ersten Radialdichtung kann an einer Seitenfläche des Außenrings des Lagers befestigt sein. Die dritte und folgende Radialdichtung dienen insbesondere dem Schutz vor einem Wassereintrag aufgrund des hohen Wasserdrucks in einer Tiefe von bis zu 50m.

Zwischen den einzelnen Radialdichtungen kann ein geeignetes Schmiermittel, wie beispielsweise Fett, angeordnet sein. Des Weiteren kann bevorzugt zwischen der zweiten und dritten Radialdichtung ein Wasserdrainagekanal vorgesehen sein, der durch den Dichtungsträgerring und den Außenring des Lagers verläuft.

Das Lager dient dazu, radiale und axiale Lasten sowie Biegemomente der Gondel aufzunehmen. Hierzu kann das Lager ein Rollenlager oder ein Gleitlager sein. Als Rollenlager können beispielsweise einreihige- oder zweireihige Vierpunktlager, Kreuzrollenlager oder Dreiringlager eingesetzt werden. Die Rollen bzw. Kugeln des Lagers können durch einen fensterartigen Käfig voneinander getrennt sein.

Der Bremssattel kann in einer Ausführungsform einen Bremsbelag aufweisen, der eine Nickel-Diamant-Beschichtung aufweist. Durch eine solche Beschichtung kann ein besonders hoher Reibungskoeffizient erreicht werden. Auf diese Weise kann eine höhere Bremsleistung erzielt werden, als mit Bremsbelägen, die beispielweise aus einem organischen Belag oder Sinterbelag bestehen. Die Bremsscheibe kann aus einem Stahlring bestehen.

Gemäß einem weiteren Aspekt wird eine Kraftanlage, insbesondere Wind- oder Gezeitenkraftanlage, mit einer wie oben beschriebenen Lageranordnung vorgeschlagen.

Weitere Vorteile und vorteilhafte Ausführungsformen sind in der Beschreibung, den Zeichnungen und den Ansprüchen angegeben. Dabei sind die in der Beschreibung und in den Zeichnungen angegebenen Kombinationen der Merkmale rein exemplarisch.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine Lageranordnung für eine Windkraftanlage oder eine Gezeitenkraftanlage mit Verstellgetrieben und einer Arretiervorrichtung;
- Fig. 2:: ein Beispiel für eine Arretiervorrichtung der Lageranordnung von Fig. 1 mit erhöhter Antriebsleistung und verstärkter Arretiervorrichtung; und
- Fig. 3:: eine beispielhafte Dichtung gegen Seewasser für die Lageranordnung von Fig. 1.

Im Folgenden werden gleiche oder funktionell gleichwirkende Elemente mit denselben Bezugszeichen gekennzeichnet.

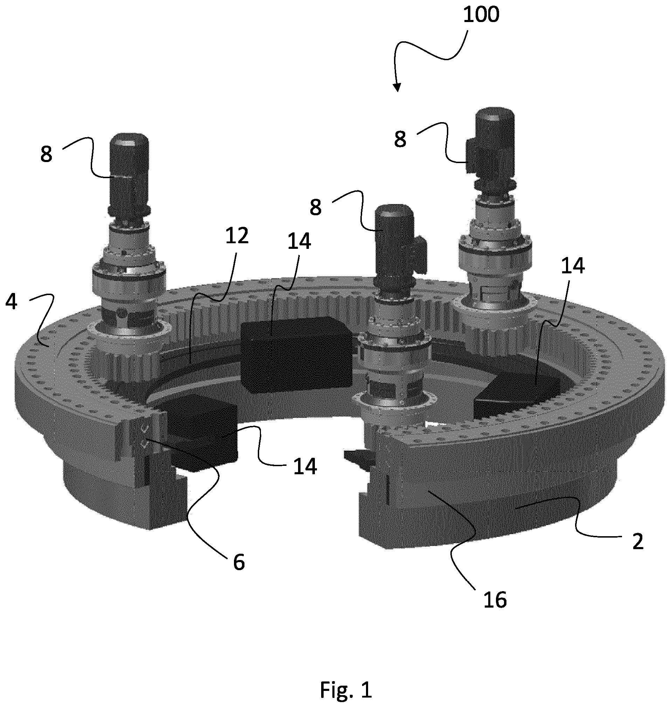

Fig. 1 zeigt eine Lageranordnung 100 für eine Windkraftanlage oder eine Gezeitenkraftanlage. Die Wind- oder Gezeitenkraftanlage weist einen Turm und eine Gondel auf.

Die Lageranordnung 100 weist einen unteren Teil 2 auf, der an dem Turm befestigbar ist. Ein oberer Teil 4 der Lageranordnung 100 ist an der Gondel befestigbar.

Um eine Rotation der Gondel in Bezug auf den Turm zu ermöglichen, weist die Lageranordnung 100 ein Lager 6 auf. Das Lager 6 kann beispielsweise ein zweireihiges Kugellager sein, wie es in Fig. 1 gezeigt ist.

Um eine optimale Energieerzeugung zu gewährleisten, kann die Gondel in Bezug auf den Turm in Abhängigkeit von der Wind- oder Strömungsrichtung ausgerichtet werden. Hierzu sind in der Lageranordnung 100 Stellantriebe 8 vorgesehen.

Ist die Gondel ausgerichtet, kann die Gondel durch die Lageranordnung 100 in dieser Position arretiert werden. Hierzu weist die Lageranordnung 100 eine Arretiervorrichtung auf.

Die Arretiervorrichtung weist einen Bremsmechanismus auf, der aus einer Bremsscheibe 12 und zumindest einem Bremssattel 14 besteht.

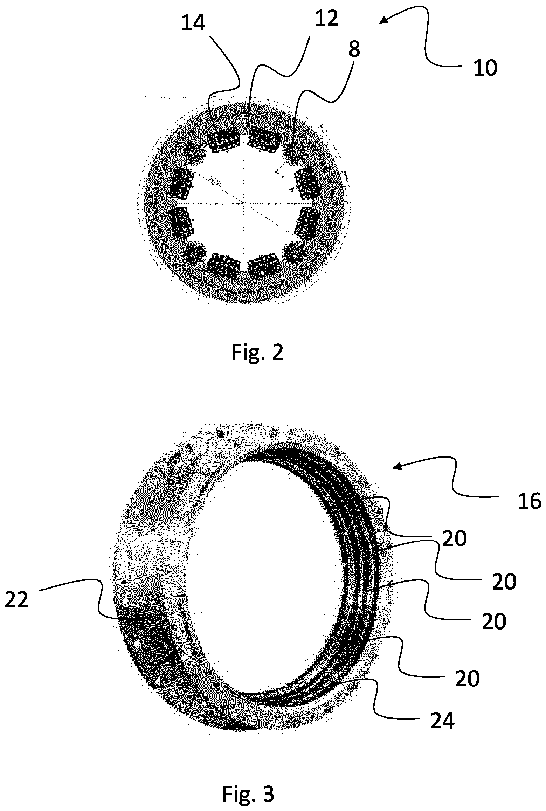

In dem in Fig. 1 gezeigten Beispiel ist die Bremsscheibe 12 an dem unteren Teil 2 und der Bremssattel 14 an dem oberen Teil angeordnet. Alternativ kann diese Anordnung auch umgedreht werden. Die Arretiervorrichtung 10 wird in Zusammenhang Fig. 2 näher beschrieben.

Zusätzlich zu den in dem Lager 6 vorhandenen Dichtungen weist die Lageranordnung 100 eine Dichtungsanordnung 16 auf, die in der Lageranordnung 100 integriert ist, und dazu ausgebildet ist, das Lager 6 gegenüber Wasser- und/oder Schmutzeintrag abzudichten. Die Dichtungsanordnung 16 wird in Fig. 3 näher beschrieben.

Obwohl das Lager 6 als zweireihiges Kugellager gezeigt ist, kann es auch als Gleitlager ausgestaltet sein.

Der Bremssattel 14 kann auch als Doppelbremssattel ausgestaltet sein. Durch die Verwendung von Bremssattel 14 und Bremsscheibe 12 kann die Gondel in jeder beliebigen Position in Bezug auf den Turm arretiert werden.

Die Arretiervorrichtung 10 ist bevorzugt mit einer Ansteuerung (nicht gezeigt) gekoppelt. Die Ansteuerung dient dazu, die Bremssättel 14 derart anzusteuern, dass sie mit der Bremsscheibe 12 in Wechselwirkung treten, d.h. Bremsbeläge, die in die Bremssättel 14 eingebaut sind, über der Bremsscheibe 12 zu spannen, um die Gondel abzubremsen und/oder zu arretieren.

In dem in Fig. 2 gezeigten Beispiel sind acht hydraulische Bremssättel 14 vorgesehen, die mit der Bremsscheibe 12 zusammenwirken. Zwischen jeweils zwei Paaren von Bremssättel 14 sind insgesamt vier Stellantriebe 8 vorgesehen.

Alternativ können elektromechanische Einfach- oder Doppelbremssättel 14 verwendet werden. Die Anzahl der Stellantriebe 8 und der Bremssättel 14 kann dabei variieren.

Wie bereits oben erläutert, weist die Lageranordnung 100 eine Dichtungsanordnung 16 auf, um das Lager 6 gegenüber einem Wasser- und Schmutzeintrag abzudichten.

Ein Beispiel für eine solche Dichtung 16 ist in Fig. 3 gezeigt. Bei der Dichtungsanordnung 16 kann es sich um ein Dichtungssystem handeln, das vier Radialdichtungen 20 aufweist und zum Anschrauben an einen Außenring der Lageranordnung 100 einen Dichtungsflanschring 22 aufweist. Die Radialdichtungen 20 sind dabei übereinander, bzw. nebeneinander angeordnet und weisen denselben Dichtungsdurchmesser auf. Jede Radialdichtung 20 kann in einem separaten Dichtungsträgerring 24 befestigt sein, der die jeweilige unter Druck stehende Dichtung 20 mechanisch stützen kann. Die Kontur der Trägerringe 20 ist dabei so ausgestaltet, dass eine Dichtlippe der Radialdichtung axial an der Kontur durch den anliegenden Wasserdruck zum Anliegen kommt und hierbei axial sowie radial gestützt wird.

Die erste, d.h. unterste, Radialdichtung 20 kann zum Schutz vor einem Eintrag von Sand oder Sedimenten dienen, um die darüber angeordneten Radialdichtungen 20 zu schützen. Der Dichtungsträgerring 24 der ersten Radialdichtung 20 kann an einer Seitenfläche des Außenrings des Lagers befestigt sein. Die dritte und folgende Radialdichtung 20 dienen insbesondere dem Schutz vor einem Wassereintrag aufgrund des hohen Wasserdrucks bei einer Gezeitenkraftanlage.

Zwischen den einzelnen Radialdichtungen 20 kann ein geeignetes Schmiermittel, wie beispielsweise Fett, angeordnet sein. Beispielsweise zwischen der zweiten und dritten Radialdichtung 20 kann ein Wasserdrainagekanal (nicht gezeigt) vorgesehen sein, der durch den Dichtungsträgerring 24 und den Außenring des Lagers 6 verläuft.

Zusammenfassend stellt die vorgeschlagene Lageranordnung eine sehr flexible Positionierung einer Gondel einer Kraftanlage in Bezug auf einen Turm bereit. Da die Arretiervorrichtung 10 der Lageranordnung mittels Bremssattel und Bremsscheibe realisiert wird, kann die Gondel in jeder beliebigen Position in Bezug auf den Turm arretiert werden. Somit wird eine sehr flexible Ausrichtung und Arretierung der Gondel ermöglicht.

Gleichzeitig kann die vorgeschlagene Lageranordnung als Gesamtsystem bereitgestellt werden, so dass ein einfacher Einsatz in einer Kraftanlage möglich ist. Ein Test auf Dichtheit und Funktion der Lageranordnung ist vor Ort, d.h. bei Einbau in die Kraftanlage, nicht mehr erforderlich, da dies bereits bei der Herstellung der Lageranordnung erfolgen kann.

### Bezugszeichenliste

- 2: unterer Teil
- 4: oberer Teil
- 6: Lager
- 8: Stellantrieb
- 10: Arretiervorrichtung
- 12: Bremsscheibe
- 14: Bremssattel/Bremszange
- 16: Dichtung sanordnung
- 20: Radialdichtung
- 22: Dichtungsflanschring
- 24: Dichtungsträgerring
- 100: Lageranordnung

## Patentansprüche

1. Lageranordnung (100) für eine Windkraftanlage oder eine Gezeitenkraftanlage mit einem Turm und einer Gondel, welche einen unteren Teil (2) aufweist, der an dem Turm befestigbar ist, und welche einen oberen Teil (4) aufweist, der an der Gondel befestigbar ist,
mit einem Lager (6), um eine Rotation der Gondel in Bezug auf den Turm zu ermöglichen, und
mit einer Arretiervorrichtung (10), um die Gondel in einer festen Position in Bezug auf den Turm zu arretieren, wobei die Arretiervorrichtung (10) einen Bremsmechanismus mit einer Bremsscheibe (12) und zumindest einem Bremssattel (14) aufweist, **dadurch gekennzeichnet, dass** die Lageranordnung (100) eine Dichtungsanordnung (16) aufweist, die in der Lageranordnung (100) integriert ist, und dazu ausgebildet ist, das Lager (6) gegenüber Wasser- und/oder Schmutzeintrag abzudichten, wobei die Dichtungsanordnung (16) mehrere Radialdichtungen (20) und eine mit diesen zusammenwirkende Laufbuchse, gegen die die Radialdichtungen (20) abdichten, aufweist, wobei die Dichtungsanordnung (16) einen Dichtungsflanschring (22) zum Anschrauben an einen Außenring der Lageranordnung (100) aufweist.

2. Lageranordnung (100) nach Anspruch 1, wobei die Bremsscheibe (12) an dem unteren Teil (2) angeordnet ist und der Bremssattel (14) an dem oberen Teil (4) angeordnet ist, oder die Bremsscheibe (12) an dem oberen Teil (4) angeordnet ist und der Bremssattel (14) an dem unteren Teil (2) angeordnet ist.

3. Lageranordnung (100) nach Anspruch 1 oder 2, wobei der Bremssattel (14) ein elektrisch angetriebener Bremssattel ist.

4. Lageranordnung (100) nach einem der vorhergehenden Ansprüche, wobei der Bremssattel (14) ein hydraulisch angetriebener Bremssattel ist.

5. Lageranordnung (100) nach einem der vorhergehenden Ansprüche, wobei das Lager (6) ein Rollenlager ist.

6. Lageranordnung (100) nach einem der Ansprüche 1 bis 4, wobei das Lager (6) ein Gleitlager ist.

7. Lageranordnung (100) nach einem der vorhergehenden Ansprüche, wobei der Bremssattel (14) einen Bremsbelag aufweist, der organische Beläge oder Sinterbeläge oder Beläge mit einer Nickel-Diamant-Beschichtung aufweist.

8. Kraftanlage, insbesondere Wind- oder Gezeitenkraftanlage, mit einer Lageranordnung (100) nach einem der Ansprüche 1 bis 7.

## Claims

1. Bearing arrangement (100) for a wind turbine or a tidal turbine comprising a tower and a nacelle, the bearing arrangement having a lower part (2), which can be fastened on the tower, and having an upper part (4), which can be fastened on the nacelle,
having a bearing (6), in order to allow rotation of the nacelle in relation to the tower, and
having an arresting device (10), in order to arrest the nacelle in a fixed position in relation to the tower, wherein the arresting device (10) has a braking mechanism comprising a brake disc (12) and at least one brake calliper (14), **characterized in that** the bearing arrangement (100) has a seal arrangement (16), which is integrated in the bearing arrangement (100) and is designed to seal the bearing (6) in relation to the ingress of water and/or dirt, wherein the seal arrangement (16) has a plurality of radial seals (20) and a bushing interacting therewith, the radial seals (20) sealing against the bushing, wherein the seal arrangement (16) has a seal flange ring (22) for screwing to an outer ring of the bearing arrangement (100).

2. Bearing arrangement (100) according to Claim 1, wherein the brake disc (12) is arranged on the lower part (2) and the brake calliper (14) is arranged on the upper part (4), or the brake disc (12) is arranged on the upper part (4) and the brake calliper (14) is arranged on the lower part (2).

3. Bearing arrangement (100) according to Claim 1 or 2, wherein the brake calliper (14) is an electrically driven brake calliper.

4. Bearing arrangement (100) according to one of the preceding claims, wherein the brake calliper (14) is a hydraulically driven brake calliper.

5. Bearing arrangement (100) according to one of the preceding claims, wherein the bearing (6) is a roller bearing.

6. Bearing arrangement (100) according to one of Claims 1 to 4, wherein the bearing (6) is a plain bearing.

7. Bearing arrangement (100) according to one of the preceding claims, wherein the brake calliper (14) has a brake lining, which comprises organic linings or sintered linings or linings with a nickel/diamond coating.

8. Power plant, in particular wind turbine or tidal turbine, having a bearing arrangement (100) according to one of Claims 1 to 7.

## Revendications

1. Agencement de palier (100) pour une installation éolienne ou une installation marémotrice munie d'une tour et d'une nacelle, qui comprend une partie inférieure (2), qui peut être fixée à la tour, et qui comprend une partie supérieure (4), qui peut être fixée à la nacelle,
muni d'un palier (6), afin de permettre une rotation de la nacelle par rapport à la tour, et
muni d'un dispositif de blocage (10), afin de bloquer la nacelle dans une position fixe par rapport à la tour, le dispositif de blocage (10) comprenant un mécanisme de freinage muni d'un disque de frein (12) et d'au moins un étrier de frein (14), **caractérisé en ce que** l'agencement de palier (100) comprend un agencement d'étanchéité (16), qui est intégré dans l'agencement de palier (100), et qui est configuré pour étanchéifier le palier (6) vis-à-vis de l'entrée d'eau et/ou de salissures, l'agencement d'étanchéité (16) comprenant plusieurs joints d'étanchéité radiaux (20) et une chemise de cylindre coopérant avec ceux-ci, contre laquelle les joints d'étanchéité radiaux (20) assurent l'étanchéité, l'agencement d'étanchéité (16) comprenant un collier de bridage d'étanchéité (22) destiné à être vissé sur un anneau extérieur de l'agencement de palier (100) .

2. Agencement de palier (100) selon la revendication 1, dans lequel le disque de frein (12) est agencé sur la partie inférieure (2) et l'étrier de frein (14) est agencé sur la partie supérieure (4), ou le disque de frein (12) est agencé sur la partie supérieure (4) et l'étrier de frein (14) est agencé sur la partie inférieure (2).

3. Agencement de palier (100) selon la revendication 1 ou 2, dans lequel l'étrier de frein (14) est un étrier de frein entraîné électriquement.

4. Agencement de palier (100) selon l'une quelconque des revendications précédentes, dans lequel l'étrier de frein (14) est un étrier de frein entraîné hydrauliquement.

5. Agencement de palier (100) selon l'une quelconque des revendications précédentes, dans lequel le palier (6) est un palier à rouleaux.

6. Agencement de palier (100) selon l'une quelconque des revendications 1 à 4, dans lequel le palier (6) est un palier lisse.

7. Agencement de palier (100) selon l'une quelconque des revendications précédentes, dans lequel l'étrier de frein (14) comprend une garniture de frein, qui comprend des garnitures organiques ou des garnitures frittées ou des garnitures munies d'un revêtement de nickel-diamant.

8. Centrale électrique, notamment installation éolienne ou marémotrice, munie d'un agencement de palier (100) selon l'une quelconque des revendications 1 à 7.
